# EUROPÄISCHE PATENTSCHRIFT

(11) **EP 3 095 198 B1**
(45) Veröffentlichungstag und Bekanntmachung des Hinweises auf die Patenterteilung: **09.01.2019**
(21) Anmeldenummer: 15700984.6
(22) Anmeldetag: 14.01.2015
(51) Int. Cl.: H04B 1/3888

(54) **SCHUTZVORRICHTUNG FÜR DISPLAYS UND VORRICHTUNG SOWIE VERFAHREN ZUM AUFBRINGEN EINER SCHUTZFOLIE AUF EIN DISPLAY**
PROTECTIVE DEVICE FOR DISPLAYS AND DEVICE AND METHOD FOR APPLYING A PROTECTIVE FILM ON A DISPLAY
DISPOSITIF DE PROTECTION D'ÉCRANS, ET DISPOSITIF AINSI QUE PROCÉDÉ DE MONTAGE D'UN FILM PROTECTEUR SUR UN ÉCRAN

(30) Priorität: 15.01.2014 DE 202014000383 U
(43) Veröffentlichungstag der Anmeldung: 23.11.2016
(73) Patentinhaber: E.V.I. GmbH, 82061 Neuried (DE)
(72) Erfinder: KOPP, Ulrich, 82061 Neuried (DE); VOGTMANN, Markus, 82061 Neuried (DE)
(74) Vertreter: TBK
(86) Internationale Anmeldenummer: PCT/EP2015/050537
(87) Internationale Veröffentlichungsnummer: WO 2015/107058

(56) Entgegenhaltungen:
- US-A1- 2006 157 630
- US-A1- 2012 211 171
- US-A1- 2013 048 203
- US-A1- 2013 048 203

## Beschreibung

Schutzfolien für Displays sind seit langem bekannt. Insbesondere bei Mobiltelefonen und Tabletcomputern erfreuen sich diese Schutzfolien großer Beliebtheit. Um ihren Zweck bestmöglich zu erfüllen und ein optisch ansprechendes Bild abzugeben, müssen derartige Folien exakt entsprechend des zu schützenden Displays zugeschnitten sein, und ebenso exakt aufgebracht werden.
Das Aufbringen derartiger Folien erweist sich jedoch als ausgesprochen schwierig. Sind diese Folien einmal von ihrem Träger abgezogen und auf das Display aufgebracht, lassen sie sich nicht mehr verschieben und die Position verändern. In der Regel sind daher mehrere Versuche nötig, um die Folie in die gewünschte Position zu bringen. Wiederholtes Abziehen und wieder Aufbringen der Folie beeinträchtigt jedoch die Folie und schadet dem Erscheinungsbild. Daher werden beim Kauf derartiger Folien üblicher Weise Packungen mit zwei bis drei Folien verkauft, um zu gewährleisten, dass zumindest eine dieser Folien optimal aufgebracht werden kann. Es gibt daher verschiedene Bemühungen, das Aufbringen der Folien zu erleichtern.
Es wurde vorgeschlagen, auf das zu schützende Display zunächst einen dünnen Wasserfilm aufzubringen, der es erlaubt, die aufgebrachte Schutzfolie auf dem Display hin- und herzuschieben, bis die optimale Position erzielt ist. Ist diese Position erreicht, soll das Wasser durch Verdrängen über die Ränder herausgedrückt werden oder durch einen Trocknungsprozess entfernt werden. Wenngleich diese Methode grundsätzlich gut funktioniert, weist sie den Nachteil auf, dass Feuchtigkeit in das Gerät eindringen kann, und unter Umständen Kalkflecken zwischen Display und Schutzfolie verbleiben. Weiterhin wurde versucht, die Problematik dadurch zu entschärfen, dass die häufig in derartigen Schutzfolien vorgesehenen Ausnehmungen, beispielsweise für Bedienknöpfe, Kamera oder Mikrofon größer als nötig ausgebildet werden, sodass zumindest geringe Positionierfehler die Funktion der Folie und des Gerätes nicht beeinträchtigen.
Neuerdings wird ein Gerät zum Aufbringen derartiger Schutzfolien auf Handys angeboten. Dieses Gerät verfügt über Formen für die gängigen Handymodelle und erlaubt, in dem Geschäft, in dem derartige Schutzfolien angeboten werden, vor Ort ein exaktes Aufbringen der Schutzfolie.

Die Drückschrift US2012211171 zeigt ein Verfahren zum Aufbringen einer Schutzvorrichtung auf ein Display. Der Gegenstand der Erfindung ist in den Ansprüchen definiert. Aufgabe der Erfindung ist es, eine Schutzvorrichtung für Displays mit einer Schutzfolie sowie eine Vorrichtung und ein Verfahren zum exakten Aufbringen dieser Schutzfolie auf ein Display zu schaffen.
Der Erfindung liegt die Idee zugrunde, eine Schutzvorrichtung für Displays mit einer Schutzfolie und einem Träger zu schaffen, die auf besonders einfache Weise exakt in der richtigen Position aufgebracht werden kann. Dies soll gemäß der Erfindung dadurch erreicht werden, dass die Schutzfolie und der Träger zumindest an zwei Seiten so hergestellt sind, dass diese Seiten zu Seiten des Geräts korrespondieren, das das zu schützende Display aufweist, und beim Aufsetzen der Schutzfolie mit Träger in der gewünschten Position gegenüber dem Gerät nicht überstehen. Diese Gestaltung erlaubt es, die Schutzfolie einfach und dennoch exakt auszurichten, indem das Gerät mit den beiden Seiten, an denen die korrespondierende Schutzvorrichtung nicht gegenüber dem Gerät vorsteht, an einem Hindernis, beispielsweise einem speziellen Rahmen oder einfach an zwei überstehenden ebenen Flächen, die beispielsweise durch zwei entsprechende Bücher geschaffen werden können, positioniert wird. Diese Vorgehensweise wird näher anhand des konkreten Ausführungsbeispiels beschrieben.
Die Schutzvorrichtung kann dann einfach über das Gerät gelegt und an die überstehenden Flächen herangeschoben werden, so dass sich automatisch eine korrekte Positionierung ergibt. Um diese Positionierung beizubehalten und die Schutzfolie dann sicher in dieser Position auf dem Display aufzubringen, ist weiterhin eine Aufbringhilfe in Form von zumindest einem Klebeelement vorgesehen, das an einer Seite mit der Schutzfolie und dem das zu schützende Display aufweisenden Gerät verbindbar ist. Dieses Klebeelement kann vor oder nach dem Positionieren der Schutzvorrichtung in der beschriebenen Weise angebracht werden. Es dient gewissermaßen als Scharnier und ermöglicht ein Abklappen der Schutzvorrichtung bestehend aus Schutzfolie und Träger aus der gewünschten Position, um anschließend den Träger abzuziehen und die Schutzfolie exakt wieder in der gewünschten Position auf das Display aufzubringen. Die gesamte Vorgehensweise wird detailliert anhand des konkreten Ausführungsbeispiels näher beschrieben.

Vorteilhaft ist auch die Seite der Schutzvorrichtung, an der das Klebeelement anzubringen ist, so gestaltet, dass diese gegenüber dem Gerät bzw. dem Display nicht übersteht. Dadurch werden die Handhabung und das exakte Positionieren der Schutzfolie nach dem Abziehen des Trägers erleichtert.

Die Aufbringhilfe in Form zumindest eines Klebeelements soll eine stabile scharnierartige Verbindung von Schutzfolie und dem zu schützenden Gegenstand ermöglichen. Das Klebeelement muss daher hinreichend flexibel sein, um die Scharnierfunktion übernehmen zu können, andererseits soll es eine möglichst geringe Dehnung aufweisen, um eine Veränderung der Position der Schutzfolie beim Auf- und Abklappen zu vermeiden. Da das Klebeelement auf die Schutzfolie und das zu schützende Display aufgeklebt wird, sollte der Klebstoff vorteilhaft einfach rückstandsfrei zu entfernen sein.

Besonders zuverlässig lässt sich die Schutzfolie positionieren, wenn zumindest zwei Klebeelemente verwendet werden, die ein Doppelscharnier ergeben, das eine Dejustierung der Schutzfolie beim Auf- und Abklappen ausschließt. Aber auch mit nur einem Klebeelement lässt sich ein gutes Ergebnis erzielen, wenn dieses in der Scharnierachse eine hinreichend große Erstreckung aufweist.

Weist die Schutzfolie eine rechteckige Form auf, wird das Klebeelement zweckmäßig an einer Längsseite der Schutzfolie vorgesehen. Damit die Aufbringhilfe in der gewünschten Weise funktioniert, ist es erforderlich, dass Schutzfolie und Träger zumindest an einer Seite exakt korrespondierend zur Seite des zu schützenden Gegenstandes ausgebildet sind, und nicht gegenüber dieser hinausragen oder zurückstehen. Wenngleich die Schutzfolien selbstverständlich immer exakt entsprechend dem Display, das geschützt werden soll, gefertigt sein sollten, steht das Trägermaterial häufig über, wobei auch das Schutzfolienmaterial sich über die eigentliche Schutzfolie erstrecken kann, sodass die Schutzfolie gewissermaßen im Innern des gesamten Blattes angeordnet ist und abgezogen werden kann, aber die Ränder durch überstehendes Trägermaterial, sowie gegebenenfalls Schutzfolienmaterial, gestützt sind. Mit derartig konfektionierten Schutzfolien ist das genannte Verfahren und die Benutzung der Aufbringhilfe nicht möglich. Die Schutzfolie und der Träger müssen an zumindest einer Seite exakt korrespondierend zu der entsprechenden Seite des zu schützenden Displays konfektioniert sein oder zugeschnitten werden, um eine scharnierartige Fixierung vornehmen zu können.

Zum Aufbringen der Schutzfolie wird ein Rahmen verwendet, der aus einer Basis, die als Grundplatte ausgebildet sein kann, besteht, und über zwei im 90 Grad Winkel angeordnete gegenüber der Grundplatte vorstehende Seitenteile verfügt. Vorteilhaft ist zumindest die Innenseite der Seitenteile aus einem elastischen Material beschaffen, das hinreichend elastisch ist, um leicht vorstehende Bedienelemente des Gerätes aufzunehmen. Wesentlich ist, dass das Gerät gut an den Seitenteilen anliegt und so seine Position definiert ist. Weist das Gerät vorstehende Bedienelemente auf, kommen diese mit der Innenfläche der Seitenteile in Kontakt und können ein planes Anliegen an den Seitenteilen verhindern. Um dies zu verhindern, können die Innenseiten der Seitenteile oder die Seitenteile gesamt aus einem hinreichend elastischen Material beschaffen sein, in das die vorstehenden Bedienelemente eingedrückt werden, so dass die das vorstehende Bedienelement aufweisende Seite des Geräts dennoch plan an den Seitenteilen anliegen kann.

Um das Gerät in der gewünschten Position zu halten, kann eine rutschhemmende Ausbildung der Basis bzw. Grundplatte vorteilhaft sein. Insbesondere wenn, wie dargelegt, die Innenseite der Seitenteile elastisch ausgebildet ist, um eventuell vorstehende Bedienelemente aufzunehmen, ist eine rutschhemmende Ausbildung vorteilhaft, da ein Zurückdrücken des Gerätes aufgrund der elastischen Kräfte aus der gewünschten Position auf diese Weise verhindert werden kann. Eine rutschhemmende Oberfläche kann beispielsweise durch eine Gummierung geschaffen werden.

Soll der Montagerahmen für Geräte eingesetzt werden, bei denen Bedienelemente weiter vorstehen, ist es vorteilhaft, an den Seitenteilen Rücksprünge auszubilden, die diese Bedienelemente aufnehmen können, um ein planes Anliegen der Seiten des Gerätes am Rahmen zu gewährleisten. Zu diesem Zweck können die Seitenteile mit vertikal und/oder horizontal verschieblichen Elementen versehen sein, die so verschoben werden können, dass unterschiedlichste Rücksprünge an unterschiedlichsten Positionen geschaffen werden können, um Rücksprünge in den Seitenteilen dort zu schaffen, wo am zu bearbeitenden Gerät Bedienelemente oder dergleichen vorstehen. Auf diese Weise können die Seitenteile an das zu bearbeitende Gerät angepasst werden und ein planes Anliegen gewährleistet werden.

Es zeigen
Fig. 1 die Schutzfolie mit Träger, auf die zwei Klebeelemente als Aufbringhilfe aufgebracht werden;

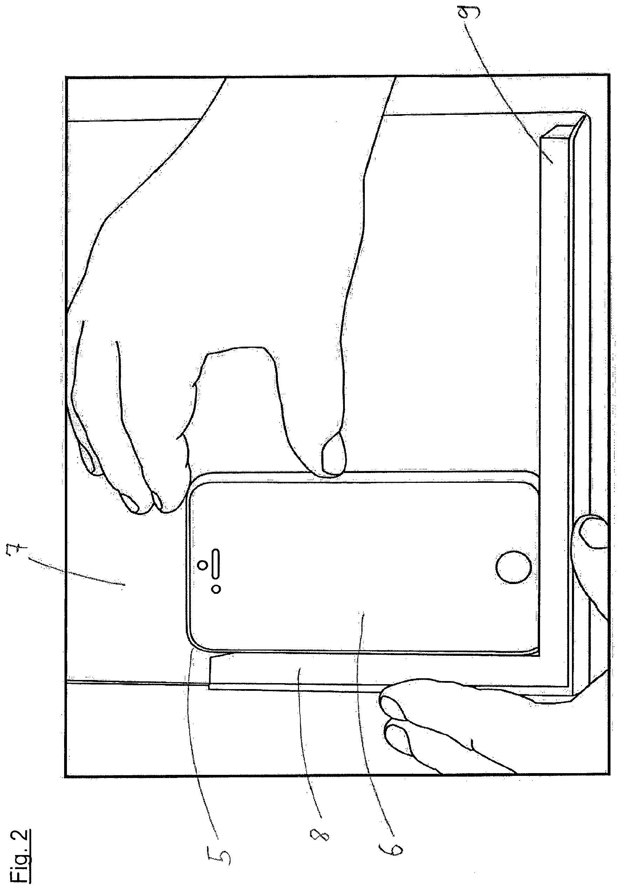

Fig. 2 das Positionieren des Geräts im Montagerahmen;

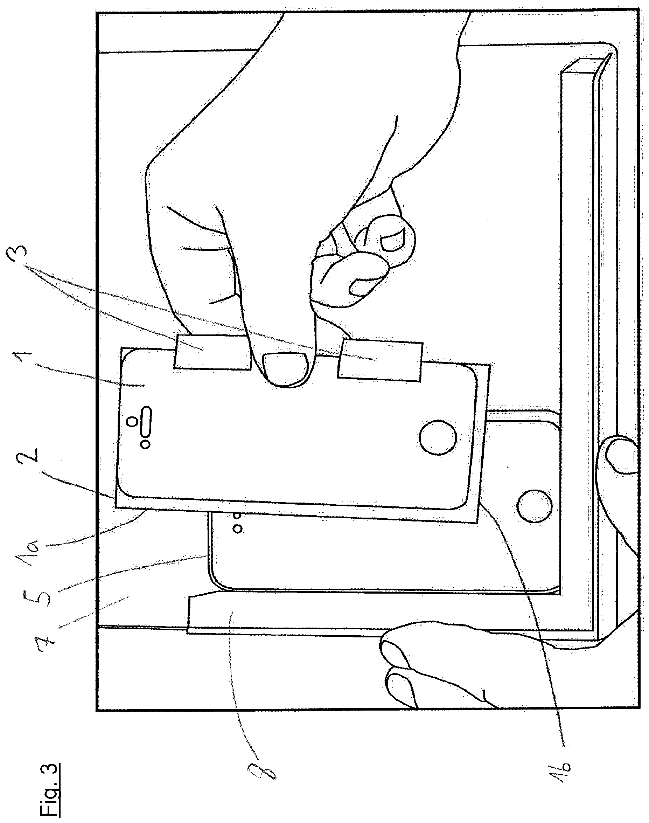

Fig. 3 das Aufsetzen der Schutzvorrichtung mit angebrachtem Klebeelement;
Fig. 4 das Positionieren der Schutzvorrichtung, indem diese ebenfalls an den Montagerahmen angelegt wird und Fixieren in dieser Position mittels der Klebeelemente;
Fig. 5 die in optimaler Position gut fixierte Schutzvorrichtung;
Fig. 6 die Schutzvorrichtung in vom Display abgeklappten Zustand beim Entfernen des Trägers von der Schutzfolie;
Fig. 7 das einfache Positionieren der Schutzfolie auf der exakten Position;
Fig. 8 das Entfernen der Klebelemente.

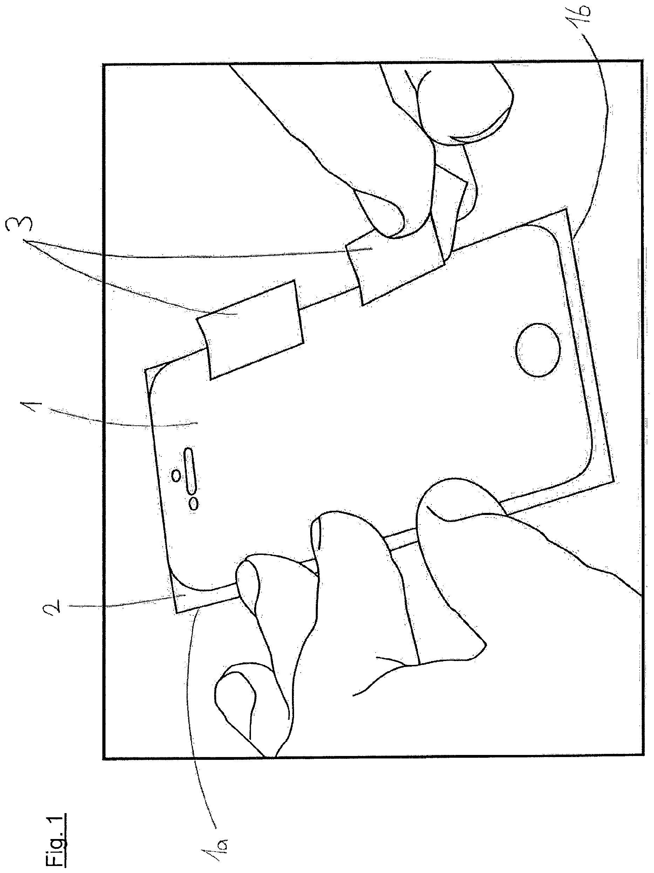

Fig. 1 zeigt die auf dem Träger 2 befindliche Schutzfolie 1 bei der Befestigung zweier Klebeelemente 3 auf einer Seite der Schutzfolie. Vorteilhaft ist die Schutzvorrichtung bestehend aus Schutzfolie 1 und Träger 2 so beschaffen, dass auch die Seite der Schutzfolie 1 bzw. des Trägers 2, an der die Klebeelemente 3 durch Aufkleben befestigt werden, exakt zu der entsprechenden Seite des Geräts 5 mit dem zu schützenden Display 6 korrespondiert und kein Überstand oder ein Zurückversetzen vorhanden ist. Im nächsten Schritt wird nun das Gerät 5 mit dem Display 6 in der gezeigten Ecke des Montagerahmens positioniert. Der Montagerahmen weist eine Grundplatte 7 als Basis sowie daran angebrachte Randleisten 8 und 9 auf, die gegenüber der Grundplatte 7 vorstehen und im 90 Grad Winkel angeordnet sind. Das Gerät 5 wird so in die durch die beiden Randleisten 8, 9 gebildete Ecke geschoben, dass eine Längs- und eine Querseite des Geräts 5 an den Randleisten 8 und 9 anliegt. Dies sind die Seiten, die für die Positionierung der Schutzfolie 1 ausschlaggebend sind.

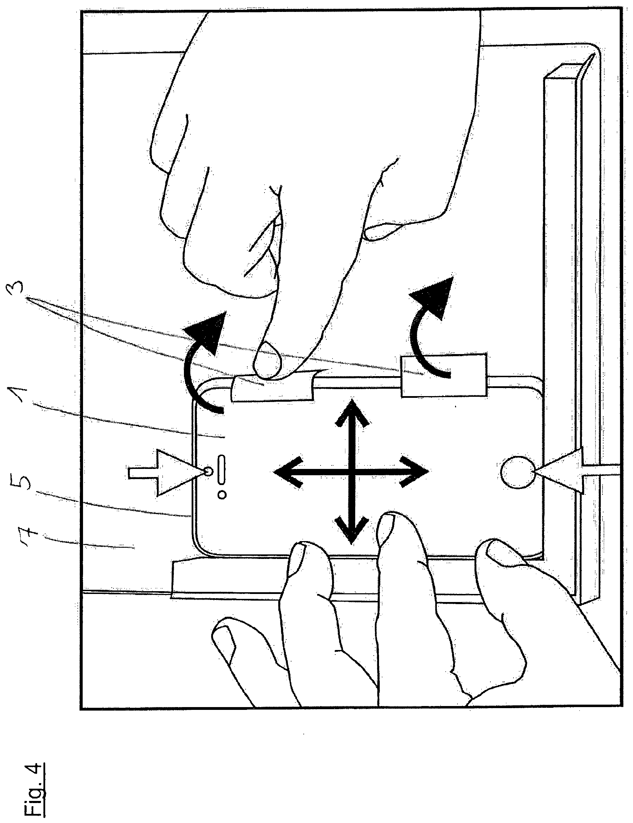

Die Schutzfolie 1 mit den aufgebrachten Klebeelementen 3 wird dann mit den korrespondierenden Seiten 1a und 1b ebenso im Montagerahmen an den Randleisten 8 und 9 positioniert, wie aus Fig. 4 zu ersehen ist. Da die Schutzvorrichtung wie ausgeführt mit ihren Seiten 1a und 1b korrespondierend zu dem das Display 6 aufweisenden Gerätes 5 ausgebildet ist, also zumindest diese Seiten gegenüber den korrespondierenden Seiten des Gerätes 5 nicht vor- oder zurückstehen, wird durch das beschriebene Anlegen im Montagerahmen automatisch eine optimale Positionierung der Schutzfolie 1 auf dem zu schützenden Display 6 erzielt. Falls dennoch eine Feinjustierung, eventuell durch Toleranzen beim Zuschnitt der Schutzvorrichtung erforderlich ist, kann diese vom Benutzer im in den Montagerahmen eingelegten Zustand ausgeführt werden. Nach der endgültigen Positionierung, wobei zur Orientierung Ausnehmungen, Tasten und dergleichen auf der Oberfläche des Gerätes 5 herangezogen werden können, wird die Schutzvorrichtung mittels der Klebeelemente 3 am Gerät 5 positioniert, wie aus Fig. 4 zu ersehen ist.

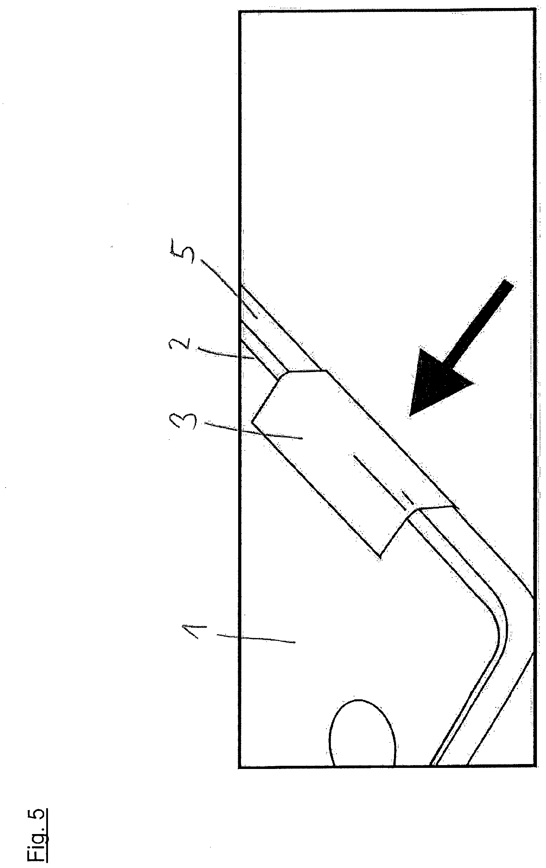

Fig. 5 zeigt die Fixierung der Schutzvorrichtung in der optimalen Position durch Andrücken der Klebeelemente 3 am Gerät 5. An der Schutzfolie 1 wurden die Klebeelemente 3, wie aus Fig. 1 zu ersehen, bereits zuvor optimal fixiert. Nach diesem in Figuren 4 und 5 dargestellten Schritt ist die exakte Position der Schutzfolie 1 perfekt fixiert und bei sorgfältiger Ausführung der weiteren Schritte muss ein Verrutschen nicht mehr befürchtet werden.

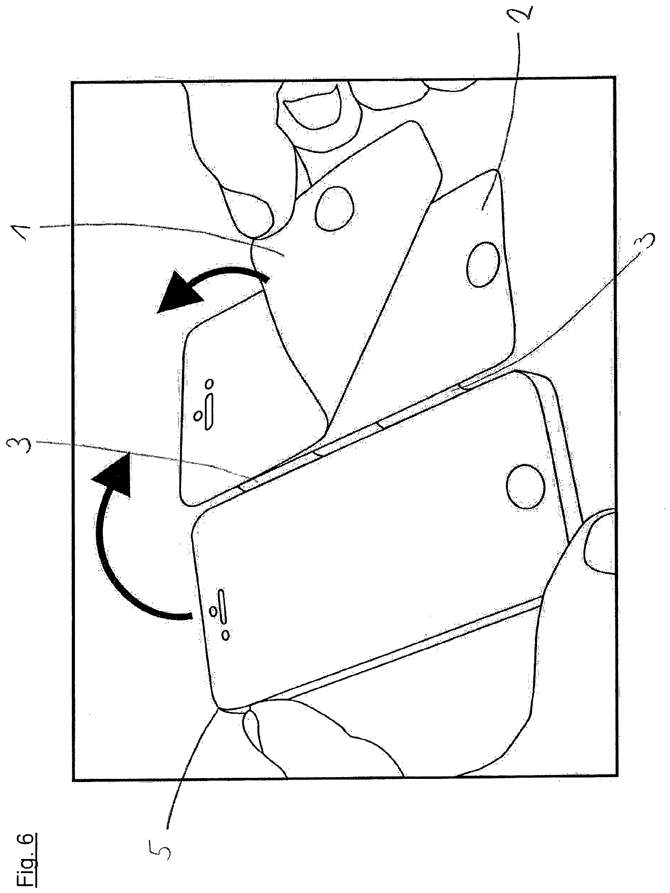

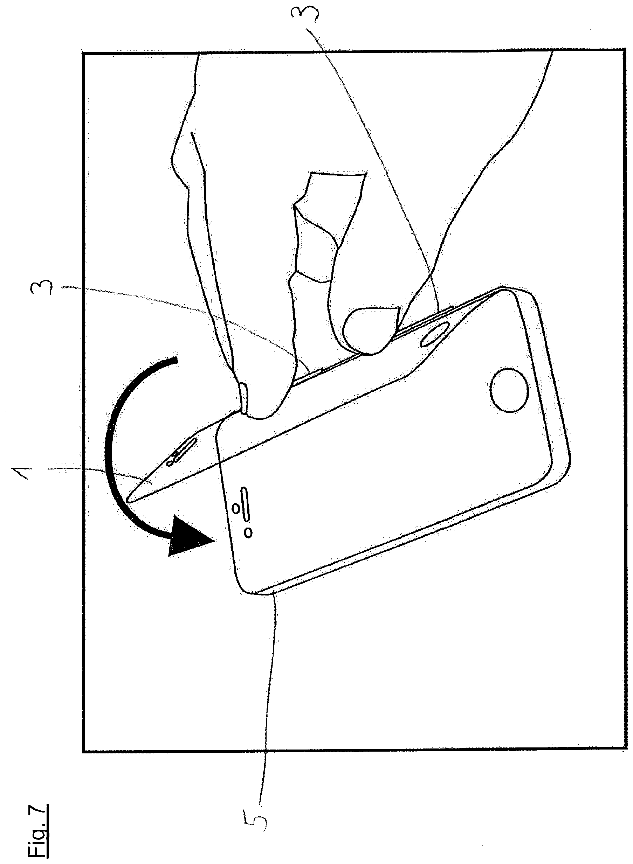

Diese Schritte sind in den Figuren 6 bis 8 dargestellt. Wie gut aus Fig. 6 zu ersehen, wirken die Klebeelemente 3 als Scharnier und erlauben ein Aufklappen der Schutzfolie 1 mit dem Träger 2. Im aufgeklappten Zustand wird, wie gut aus Fig. 6 zu ersehen, der Träger 2 vorsichtig abgezogen. Nach dem Abziehen des Trägers 2 werden die als Scharniere wirkenden Klebeelemente 3 sichtbar. Die Schutzfolie 1 wird dann sorgfältig zurück auf das Display 6 geklappt, wie in Fig. 7 dargestellt. Die Schutzfolie 1 wird dabei durch das Scharnier exakt auf die gewünschte Position zurückgeklappt.

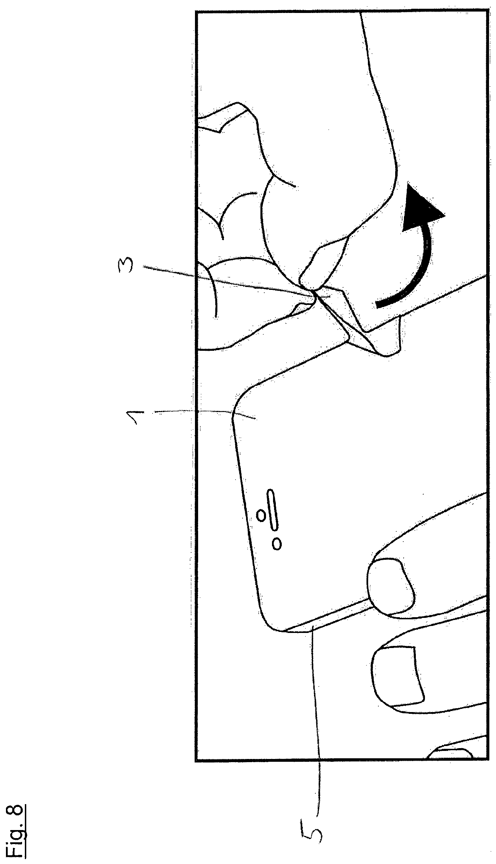

Der erste Kontakt mit dem Display 6 entsteht an der Seite, die durch die Klebeelemente 3 mit der Seitenwand 5 des Gehäuses verbunden ist. Von dieser Seite aus wird die Schutzfolie 1 langsam auf das Display 6 aufgebracht und so weit angedrückt, dass ihre Lage endgültig fixiert ist. Dieser Zustand ist in Fig. 8 dargestellt.

Nachdem die Schutzfolie 1 nunmehr in ihrer exakten optimalen Lage auf dem Display 6 fixiert ist, werden die Klebeelemente 3, wie in Fig. 8 gezeigt, vorsichtig abgezogen. Anschließend kann die Schutzfolie 1 durch sorgfältiges Ausstreichen von der Mitte des Displays 6 zu den Rändern endgültig fixiert werden und eventuell doch eingeschlossene Luftblasen über die Ränder ausgestrichen werden.

## Patentansprüche

1. Verfahren zum Aufbringen einer Schutzvorrichtung auf ein Display (6),
wobei die Schutzvorrichtung eine Schutzfolie (1) und einen Träger (2), der diese trägt, aufweist und die Schutzfolie (1) und/oder der Träger (2) zumindest an zwei Seiten so hergestellt sind, dass diese Seiten zu Seiten des Geräts (5), das das zu schützende Display (6) aufweist, korrespondieren und beim Aufsetzen der Schutzfolie (1) mit Träger (2) in der gewünschten Position gegenüber dem das Display (6) aufweisenden Geräts (5) nicht überstehen, wobei eine Aufbringhilfe in Form von zumindest einem Klebeelement (3) vorgesehen ist, das an einer Seite mit der Schutzfolie (1) und dem Gerät (5) verbindbar ist, wobei zum Aufbringen der Schutzvorrichtung ein Rahmen verwendet wird, der eine Grundplatte (7) und nur zwei im 90° Winkel angeordnete gegenüber der Grundplatte (7) vorstehende Seitenteile (8, 9) hat, die eine Oberfläche aus elastischem Material aufweisen, das in der Lage ist, vorstehende Bedienelemente des Gerätes (5) aufzunehmen, wobei das Gerät (5) in die durch die beiden Seitenteile (8, 9) gebildete Ecke geschoben, so dass eine Längs- und eine Querseite des Geräts (5) an den Seitenteilen (8, 9) anliegt und die Schutzvorrichtung mit den zwei Seiten, die zu den Seiten des Geräts (5) korrespondieren, an die vorstehenden Seitenteile (8, 9) angelegt und genau positioniert wird, wobei die Schutzvorrichtung in dieser Position mittels des Klebeelements (3) auf der genannten Seite scharnierartig an dem Gerät (5) fixiert wird, indem ein Teil des Klebeelements (3) mit der Schutzfolie (1) und ein Teil mit dem Gerät (5) verbunden wird, und dann das Klebeelement (3) als Scharnier wirkt und die Schutzfolie (1) mit dem Träger (2) um dieses herum aufgeklappt und vom Display (6) abgehoben wird und anschließend der Träger (2) entfernt wird, wobei dann die Schutzfolie (1) langsam von der genannten Seite wieder auf das Display (6) geklappt wird und auf diesem fixiert wird, wobei anschließend das Klebeelement (3) entfernt wird und die Schutzfolie (1) nochmal durch Überstreichen endgültig fixiert wird.

2. Verfahren zum Aufbringen einer Schutzvorrichtung auf ein Display (6),
wobei die Schutzvorrichtung eine Schutzfolie (1) und einen Träger (2), der diese trägt, aufweist und die Schutzfolie (1) und/oder der Träger (2) zumindest an zwei Seiten so hergestellt sind, dass diese Seiten zu Seiten des Geräts (5), das das zu schützende Display (6) aufweist, korrespondieren und beim Aufsetzen der Schutzfolie (1) mit Träger (2) in der gewünschten Position gegenüber dem das Display (6) aufweisenden Geräts (5) nicht überstehen, wobei eine Aufbringhilfe in Form von zumindest einem Klebeelement (3) vorgesehen ist, das an einer Seite mit der Schutzfolie (1) und dem Gerät (5) verbindbar ist, wobei zum Aufbringen der Schutzvorrichtung ein Rahmen verwendet wird, der eine Grundplatte (7) und nur zwei im 90° Winkel angeordnete gegenüber der Grundplatte (7) vorstehende Seitenteile (8, 9) hat, die Teile aufweisen, die vertikal und/oder horizontal parallel verschiebbar sind, um Rücksprünge in den Seitenteilen (8, 9) auszubilden, wobei die verschiebbaren Teile so verschoben werden, dass Rücksprünge in den Seitenteilen (8, 9) dort geschaffen werden, wo am zu bearbeitenden Gerät Bedienelemente vorstehen und das Gerät (5) in die durch die beiden Seitenteile (8, 9) gebildete Ecke geschoben, so dass eine Längs- und eine Querseite des Geräts (5) an den Seitenteilen (8, 9) anliegt und die Schutzvorrichtung mit den zwei Seiten, die zu den Seiten des Geräts (5) korrespondieren, an die vorstehenden Seitenteile (8, 9) angelegt und genau positioniert wird, wobei die Schutzvorrichtung in dieser Position mittels des Klebeelements (3) auf der genannten Seite scharnierartig an dem Gerät (5) fixiert wird, indem ein Teil des Klebeelements (3) mit der Schutzfolie (1) und ein Teil mit dem Gerät (5) verbunden wird, und dann das Klebeelement (3) als Scharnier wirkt und die Schutzfolie (1) mit dem Träger (2) um dieses herum aufgeklappt und vom Display (6) abgehoben wird und anschließend der Träger (2) entfernt wird, wobei dann die Schutzfolie (1) langsam von der genannten Seite wieder auf das Display (6) geklappt wird und auf diesem fixiert wird, wobei anschließend das Klebeelement (3) entfernt wird und die Schutzfolie (1) nochmal durch Überstreichen endgültig fixiert wird.

## Claims

1. Method for applying a protective device to a display (6),
wherein the protective device has a protective film (1) and a carrier (2) which carries the same, and the protective film (1) and/or the carrier (2) are produced on at least two sides such that these sides correspond to sides of the unit (5) which has a display (6) to be protected and do not project when the protective film (1) with carrier (2) is placed in the desired position with respect to the unit (5) having the display (6), wherein an application aid is provided in the form of at least one adhesive element (3) which, on one side, can be connected to the protective film (1) and the unit (5), wherein, to apply the protective device, use is made of a frame which has a base plate (7) and only two side parts (8, 9) arranged at a 90° angle and projecting with respect to the base plate (7), which have a surface made of elastic material which is capable of accommodating projecting operating elements of the unit (5), wherein the unit (5) is pushed into the corner formed by the two side parts (8, 9), so that a longitudinal and transverse side of the unit (5) rests on the side parts (8, 9) and the protective device having the two sides which correspond to the side of the unit (5) is laid on the projecting side parts (8, 9) and is positioned accurately, wherein the protective device is fixed to the unit (5) on the aforementioned side in the manner of a hinge in this position by means of the adhesive element (3) by part of the adhesive element (3) being connected to the protective film (1) and part being connected to the unit (5), and then the adhesive element (3) acting as a hinge, and the protective film (1) with the carrier (2) is folded around the said adhesive element (3) and is lifted off the display (6) and the carrier (2) is then removed, wherein the protective film (1) is then folded onto the display (6) again slowly from the aforementioned side and is fixed to the said display (6), wherein the adhesive element (3) is then removed and the protective film (1) is finally fixed once more by smoothing over.

2. Method for applying a protective device to a display (6),
wherein the protective device has a protective film (1) and a carrier (2) which carries the same, and the protective film (1) and/or the carrier (2) are produced on at least two sides such that these sides correspond to sides of the unit (5) which has a display (6) to be protected and do not project when the protective film (1) with carrier (2) is placed in the desired position with respect to the unit (5) having the display (6), wherein an application aid is provided in the form of at least one adhesive element (3) which, on one side, can be connected to the protective film (1) and the unit (5), wherein, to apply the protective device, use is made of a frame which has a base plate (7) and only two side parts (8, 9) arranged at a 90° angle and projecting with respect to the base plate (7), which have parts which can be displaced vertically and/or horizontally in parallel in order to form recesses in the side parts (8, 9), wherein the displaceable parts are displaced such that recesses in the side parts (8, 9) are created where operating elements project on the unit to be processed, and the unit (5) is pushed into the corner formed by the two side parts (8, 9), so that a longitudinal and transverse side of the unit (5) rests on the side parts (8, 9) and the protective device having the two sides which correspond to the sides of the unit (5) is laid on the projecting side parts (8, 9) and is positioned accurately, wherein the protective device is fixed to the unit (5) on the aforementioned side in the manner of a hinge in this position by means of the adhesive element (3) by part of the adhesive element (3) being connected to the protective film (1) and part being connected to the unit (5), and then the adhesive element (3) acting as a hinge, and the protective film (1) with the carrier (2) is folded around the said adhesive element (3) and is lifted off the display (6) and the carrier (2) is then removed, wherein the protective film (1) is then folded onto the display (6) again slowly from the aforementioned side and is fixed to the said display (6), wherein the adhesive element (3) is then removed and the protective film (1) is finally fixed once more by smoothing over.

## Revendications

1. Procédé d'application d'un dispositif de protection sur un écran (6),
dans lequel le dispositif de protection comporte un film de protection (1) et un support (2) portant celui-ci, et le film de protection (1) et/ou le support (2) sont réalisés sur au moins deux côtés de manière à ce que lesdits côtés correspondent à des côtés de l'appareil (5) qui comporte l'écran à protéger (6), et qu'ils ne dépassent pas de l'appareil (5) comportant l'écran (6) lorsque le film de protection (1) est mis en place avec le support (2) dans la position souhaitée, dans lequel il est prévu un auxiliaire d'application sous la forme d'au moins un élément adhésif (3) qui peut être relié d'un côté au film de protection (1) et à l'appareil (5), dans lequel, pour mettre en place le dispositif de protection, un cadre est utilisé, celui-ci comportant une plaque de base (7) et seulement deux parties latérales (8, 9) disposées en formant un angle de 90° et dépassant par rapport à la plaque de base (7), qui présentent une surface en matériau élastique capable de recevoir des éléments de commande de l'appareil (5) faisant saillie, dans lequel l'appareil (5) est repoussé dans le coin formé par les deux parties latérales (8, 9) de manière à ce qu'un côté longitudinal et un côté transversal de l'appareil (5) viennent en appui contre les parties latérales (8, 9) et à ce que le dispositif de protection soit placé et positionné précisément avec les deux côtés qui correspondent aux côtés de l'appareil (5), sur les parties latérales (8, 9) faisant saillie, dans lequel le dispositif de protection est fixé de manière articulée à l'appareil (5) dans ladite position au moyen de l'élément adhésif (3) sur ledit côté, en reliant une partie de l'élément adhésif (3) au film de protection (1) et une partie à l'appareil (5), puis l'élément adhésif (3) joue le rôle de charnière et le film de protection (1) avec le support (2) est rabattu autour de celui-ci et est enlevé de l'écran (6), puis le support (2) est retiré, dans lequel le film de protection (1) est ensuite lentement de nouveau rabattu sur l'écran (6) depuis ledit côté et fixé à celui-ci, dans lequel l'élément adhésif (3) est ensuite retiré et le film de protection (1) est enfin à nouveau fixé par réapplication.

2. Procédé d'application d'un dispositif de protection sur un écran (6),
dans lequel le dispositif de protection comporte un film de protection (1) et un support (2) portant celui-ci, et le film de protection (1) et/ou le support (2) sont réalisés sur au moins deux côtés de manière à ce que lesdits côtés correspondent à des côtés de l'appareil (5) qui comporte l'écran à protéger (6), et qu'ils ne dépassent pas de l'appareil (5) comportant l'écran (6) lorsque le film de protection (1) est mis en place avec le support (2) dans la position souhaitée, dans lequel il est prévu un auxiliaire d'application sous la forme d'au moins un élément adhésif (3) qui peut être relié d'un côté au film de protection (1) et à l'appareil (5), dans lequel, pour mettre en place le dispositif de protection, un cadre est utilisé, celui-ci comportant une plaque de base (7) et seulement deux parties latérales (8, 9) disposées en formant un angle de 90° et dépassant par rapport à la plaque de base (7), qui présentent des parties qui peuvent être déplacées verticalement et/ou horizontalement en parallèle afin de former des creux dans les parties latérales (8, 9), dans lequel les parties pouvant être déplacées sont déplacées de manière à créer des creux dans les parties latérales (8, 9) où des éléments de commande dépassent de l'appareil à usiner et l'appareil (5) est repoussé dans le coin formé par les deux parties latérales (8, 9) de manière à ce qu'un côté longitudinal et un côté transversal de l'appareil (5) viennent en appui contre les parties latérales (8, 9) et à ce que le dispositif de protection soit placé et positionné précisément avec les deux côtés qui correspondent aux côtés de l'appareil (5), sur les parties latérales (8, 9) faisant saillie, dans lequel le dispositif de protection est fixé de manière articulée à l'appareil (5) dans ladite position au moyen de l'élément adhésif (3) sur ledit côté, en reliant une partie de l'élément adhésif (3) au film de protection (1) et une partie à l'appareil (5), puis l'élément adhésif (3) joue le rôle de charnière et le film de protection (1) avec le support (2) est rabattu autour de celui-ci et est enlevé de l'écran (6) puis le support (2) est retiré, dans lequel le film de protection (1) est ensuite lentement de nouveau rabattu sur l'écran (6) depuis ledit côté et fixé à celui-ci, dans lequel l'élément adhésif (3) est ensuite retiré et le film de protection (1) est enfin à nouveau fixé par réapplication.
